# EUROPÄISCHE PATENTSCHRIFT

(11) **EP 3 628 997 B1**
(45) Veröffentlichungstag und Bekanntmachung des Hinweises auf die Patenterteilung: **06.07.2022**
(21) Anmeldenummer: 19198402.0
(22) Anmeldetag: 19.09.2019
(51) Int. Cl.: G01M 13/025

(54) **PRÜFSTAND ZUM TESTEN EINES PRÜFLINGS MIT DREHMOMENTÜBERTRAGENDEN KOMPONENTEN EINES ANTRIEBSSTRANGS EINES FAHRZEUGS**
TEST BENCH FOR TESTING A SPECIMEN WITH TORQUE TRANSMITTING COMPONENTS OF A DRIVE TRAIN OF A VEHICLE
BANC D'ESSAI PERMETTANT D'ESSAYER UN OBJET D'ESSAI POURVU DE COMPOSANTS DE TRANSMISSION DE COUPLE D'UNE CHAÎNE CINÉMATIQUE D'UN VÉHICULE

(30) Priorität: 25.09.2018 DE 102018216382
(43) Veröffentlichungstag der Anmeldung: 01.04.2020
(73) Patentinhaber: GTSystem GmbH, 52457 Aldenhoven (DE)
(72) Erfinder: KREBS, Jörg, 38895 Derenburg (DE); PRZYBYLSKI, Jennifer, 52499 Baesweiler (DE); APOLD, Dieter, 52355 Düren (DE)
(74) Vertreter: Neumann Müller Oberwalleney Patentanwälte PartG mbB

(56) Entgegenhaltungen:
- DE-A1-102011 114 610
- DE-B3-102009 025 049
- US-A1- 2004 255 698

## Beschreibung

Der Erfindung betrifft einen Prüfstand zum Testen eines Prüflings mit drehmomentübertragenden Komponenten eines Antriebsstrangs eines Fahrzeugs, wobei der Prüfstand einen Träger zum Aufnehmen eines Antriebsmotors und der drehmomentübertragenden Komponente, ein Gestell, das zwei Seitenwangen aufweist, einen Träger, der an dem Gestell vertikal verstellbar geführt ist, wobei der Träger einen Motorträger zum Aufnehmen des Antriebsmotors und einen Prüflingträger zum Aufnehmen des Prüflings aufweist, wobei der Motorträger und der Prüflingträger als separate, miteinander verbundene Baueinheiten gestaltet sind, und wobei der Motorträger zwischen den beiden Seitenwangen des Gestells angeordnet ist, und eine Verstelleinheit zum vertikalen Verstellen des Trägers gegenüber dem Gestell, aufweist.

Ein solcher Prüfstand in Form eines Getriebeprüfstandes ist aus der DE 10 2011 114 610 A1 bekannt. Hierbei weist der Träger einen Motorträger zum Aufnehmen eines Antriebsmotors des Prüfstandes auf sowie eine Getriebeaufspannplatte zum Aufnehmen eines Getriebes als Prüfling. Die Verwendung einer gemeinsamen Führung für einen Motorträger, auf welchem der antreibende Motor sitzt, und der Getriebeaufspannplatte, auf welcher der Prüfling sitzt, gewährleistet eine betriebssichere und schnelle Anpassung der unterschiedlichen Prüflinge bzw. zu prüfenden Getriebe an die Gegebenheiten des Prüfstandes. Die Besonderheiten der zu prüfenden Getriebe, welche vorzugsweise als Deaxialgetriebe gebaut werden, liegen darin, dass je nach Einbausituation in dem entsprechenden Kraftfahrzeug die parallel zur Antriebswelle des Getriebes verlaufenden Abtriebswellen einen unterschiedlichen Höhenversatz und einen unterschiedlichen vertikalen Versatz zur Antriebswelle aufweisen. Somit lassen sich die Abtriebswellen des Getriebes unabhängig von der Höhe der Antriebswelle des Getriebes zeitsparend und betriebssicher auf die am Abtrieb des Getriebes bei einem Getriebeprüfstand verwendeten Bremsen einstellen. Diese Bremsen sind zumeist sehr große Elektromotoren bzw. Dynamometer, welche an einem Getriebeprüfstand vorzugsweise stationär installiert werden, so dass ein Versetzen oder Umbauen dieser zum Abtrieb verwendeten Elektromotoren bzw. Dynamometer wegen der zur Verfügung stehenden Variabilität des Trägers nicht notwendig ist. Die gemeinsame Führung bieten zudem an dem Getriebeprüfstand für den Motorträger und für die Getriebeaufspannplatte eine besonders stabile und steife Anbindung des Motorträgers und der Getriebeaufspannplatte an das Gestell des Getriebeprüfstandes.

Aus der US 8 186 206 B2 ist ein Prüfstand für Komponenten eines Antriebsstrangs gekannt, der eine Polymerbasis aufweist, die beispielsweise auf einer Betonplatte steht. Ein Dynamometer ist auf der Polymerbasis montiert. Ein Rahmen ist an der Polymerbasis angebracht und ist so konfiguriert, dass er eine Antriebsstrangkomponente trägt, die mit dem Dynamometer verbunden ist. Das Polymermaterial der Polymerbasis kann ein Polymerverbundstoff aus einem Quarzfüllstoff und einem hochfesten Epoxidharz sein. Das Polymermaterial, das in eine gewünschte Form gegossen oder geformt wird, wird so ausgewählt, dass es wünschenswerte Geräusch- und Vibrationseigenschaften für die spezielle Antriebsstrang-Testinstallation aufweist.

DE 10 2009 025 049 B3 offenbart einen Prüfstand zum Prüfen eines Testkörpers. Der Prüfstand umfasst eine Antriebseinheit zum drehenden Antreiben des Testkörpers. Der Testkörper ruht auf einer Lagereinheit und ist über eine Kupplung mit einem Fixierelement verbunden. Der Prüfstand mit seinen mechanisch aktiven Teile, d.h. die Antriebseinheit, die Lagereinheit und das Fixierelement, ruht auf einem schwingungsdämpfenden Tisch. Der schwingungsdämpfende Tisch kann aus einem Polymerbeton hergestellt sein. Durch die Aufstellung des Prüfstands auf einem schwingungsdämpfenden Tisch hat der Prüfstand ein schwingungsdämpfendes Fundament, durch das die vom Prüfstand erzeugten Schwingungen zum Untergrund gedämpft weitergeleitet werden.

US 2004/0255698 A1 offenbart eine Vorrichtung zur Prüfung einer Spindel, wobei die Spindel auf einem Sockel montiert und über eine Welle mit einer Rotationslastvorrichtung verbunden ist. Der Sockel kann aus einer Stahlkonstruktion gebildet sein, die mit einem Polymerbeton gefüllt oder von diesem umgeben ist.

DE 10 2012 220 163 A1 zeigt eine Schwenkeinrichtung zum Aufnehmen eines Prüfstandes. Die Schwenkeinrichtung weist ein festes Unterteil und ein auf dem Unterteil schwenkbar gelagertes Oberteil auf. Das Unterteil und das Oberteil sind jeweils als schwingungsdämpfende Fundamentkörper ausgebildet. Aufgrund der Eigenschaften und der Ausgestaltung der verwendeten schwingungsdämpfenden Fundamentkörper soll eine Schwingungsübertragung von dem schwingungserzeugenden Prüfstand vom Prüfstand zum Untergrund optimiert werden.

DE 39 19 450 A1 beschreibt eine Messvorrichtung zum Messen von periodisch sich ändernden Kräften und/oder Momenten an sich drehenden Rotoren, insbesondere von Unwuchten oder Ungleichförmigkeiten des Rotors, z. B. Reifenungleichförmigkeiten bei Luftreifen. Um eine Unterdrückung von auf die Messwertaufnehmer der Messvorrichtung einwirkenden Störschwingungen zu erreichen, weist die Messvorrichtung ein Maschinenbett in Form eines blockförmigen Formgusskörpers aus gehärtetem, hochgefülltem Reaktionsharz auf. Hierdurch lassen sich Störschwingungen unterdrücken, die über das Maschinenbett in die Messeinrichtung eingeleitet werden.

Bei heutigen Antrieben von Kraftfahrzeugen kommen vermehrt Elektromotoren zum Einsatz, wie zum Beispiel bei Hybridantrieben oder reinen Elektroantrieben für Kraftfahrzeuge. Elektromotoren werden üblicherweise bei höheren Drehzahlen betrieben als herkömmliche Verbrennungsmotoren, sodass es erforderlich ist, drehmomentübertragende Komponenten der Antriebsstränge von Kraftfahrzeugen bei höheren Drehzahlen zu prüfen als bisher. Für die daraus resultierenden Vibrationen sind herkömmliche Prüfstände nach dem Stand der Technik nicht ausgelegt.

Aufgabe der vorliegenden Erfindung ist es, einen Prüfstand bereitzustellen, der einfach an verschiedene Prüflinge angepasst werden kann und verbesserte Dämpfungseigenschaften aufweist, um auch Prüflinge unter Bedingungen mit erhöhter Drehzahl prüfen zu können.

Die Aufgabe wird durch einen Prüfstand nach Anspruch 1 gelöst. Beispielhafte Ausgestaltungen ergeben sich aus den abhängigen Ansprüchen.

Der Träger nimmt mit seinem Motorträger den Antriebsmotor und mit seinem Prüflingträger den Prüfling, zum Beispiel ein Getriebe, auf. Dadurch sind der Antriebsmotor und der Prüfling gemeinsam gegenüber dem Gestell verstellbar geführt. Die Verwendung dieser gemeinsamen Führung gewährleistet eine betriebssichere und schnelle Anpassung der unterschiedlichen Prüflinge bzw. zu prüfenden Getriebe an die Gegebenheiten des Prüfstandes. Durch die Seitenwangen aus Mineralguss wird sichergestellt, dass bei einer hohen Stabilität des Gestells verbesserte Dämpfungseigenschaften des Gestells an sich vorliegen. Hierdurch wird es ermöglicht, auch Antriebskomponenten für hochdrehende drehmomentübertragende Komponenten zu prüfen.

Der Motorträger und der Prüflingträger sind als separate, miteinander verbundene Baueinheiten gestaltet.

Der Motorträger ist zwischen den beiden Seitenwangen des Gestells angeordnet und an diesen vertikal verstellbar geführt.

Die Seitenwangen des Gestells können im Wesentlichen parallel zueinander angeordnet sein.

Der Mineralguss kann zumindest einen mineralischen Füllstoff sowie ein Bindemittel umfassen. Zum Beispiel kann der Mineralguss mindestens 80 Vol.-% mineralischen Füllstoff und maximal 20 Vol.-% Bindemittel aufweisen. Der mineralische Füllstoff kann Quarzsand enthalten. Das Bindemittel kann Harz, insbesondere Epoxidharz, enthalten.

Bei einer beispielhaften Ausgestaltung des Prüfstandes können die Führungen jeweils zumindest ein Spannelement zum Festsetzen des Trägers am Gestell aufweisen. Hierdurch sind die Funktionen des Führens des Trägers und des Festsetzens des Trägers in eine Baueinheit integriert. Alternativ oder zusätzlich kann auch eine von der Führung separate Baueinheit zum Festsetzen des Trägers vorgesehen sein.

Die Führungen können derart gestaltet sein, dass sie jeweils einen Führungsschlitz und zumindest ein Führungselement aufweisen, wobei das zumindest eine Führungselement in dem Führungsschlitz verstellbar geführt ist.

Die Seitenwangen können jeweils zumindest zwei Führungen aufweisen. Hierbei können in den Seitenwangen die Führungsschlitze der Führungen angeordnet sein, in denen die Führungselemente, die mit dem Träger verbunden sind, vertikal verstellbar geführt sind. Alternativ oder zusätzlich kann auch der Träger Führungsschlitze der zumindest zwei Führungen aufweisen, wobei die Führungselemente am Gestell befestigt sind.

Hierbei können die Führungselemente des Trägers jeweils zumindest ein Spannelement zum Festsetzen des Trägers am Gestell aufweisen.

Die Führungen einer ersten Seitenwange der beiden Seitenwangen und die Führungen einer zweiten Seitenwange der beiden Seitenwangen können paarweise gegenüberliegend zueinander angeordnet sein.

Die Führungen können Motorträgerführungen zum Führen des Motorträgers umfassen. Hierbei können die Motorträgerführungen jeweils eine Verstärkungsplatte aufweisen, die in die jeweilige Seitenwange eingegossen ist, wobei die Verstärkungsplatte einen Führungsschlitz aufweist.

Die Führungen können ferner Prüflingträgerführungen zum Führen des Prüflingträgers aufweisen. Hierbei können die Prüflingträgerführungen jeweils eine Führungsschiene aufweisen, die an der jeweiligen Seitenwange befestigt ist und an der der Prüflingträger vertikal geführt ist.

Die Führungsschienen können an den Seitenwangen jeweils zumindest ein Spannelement zum Festsetzen des Prüflingträgers am Gestell aufweisen.

Die Führungsschienen können in einem Ausführungsbeispiel jeweils an einer Stirnfläche der jeweiligen Seitenwange angeordnet sein, wobei die Stirnflächen der beiden Seitenwangen in einer gemeinsamen Ebene liegend angeordnet sind.

Zur Erhöhung der Stabilität des Prüfstands können die Seitenwangen auf einer gemeinsamen Bodenplatte befestigt sein.

Ein Ausführungsbeispiel der Erfindung wird im Folgenden anhand der Zeichnungen näher erläutert. Hierin zeigen
- Figur 1: eine perspektivische Darstellung eines Prüfstandes,
- Figur 2: einen Längsschnitt des Prüfstandes gemäß Figur 1,
- Figur 3: eine Seitenansicht des Prüfstands gemäß Figur 1,
- Figur 4: eine Frontansicht des Prüfstands gemäß Figur 1,
- Figur 5: einen Horizontalschnitt des Prüfstandes gemäß Figur 1,
- Figur 6: eine vergrößerte Darstellung einer der Motorträgerführungen des Ausschnitts VI gemäß Figur 5,
- Figur 7: eine vergrößerte Darstellung einer der Prüflingträgerführungen des Ausschnitts VII gemäß Figur 4, und
- Figur 8: eine Schnittdarstellung im Bereich der Prüflingträgerführung entlang der Schnittlinie VIII-VIII gemäß Figur 7.

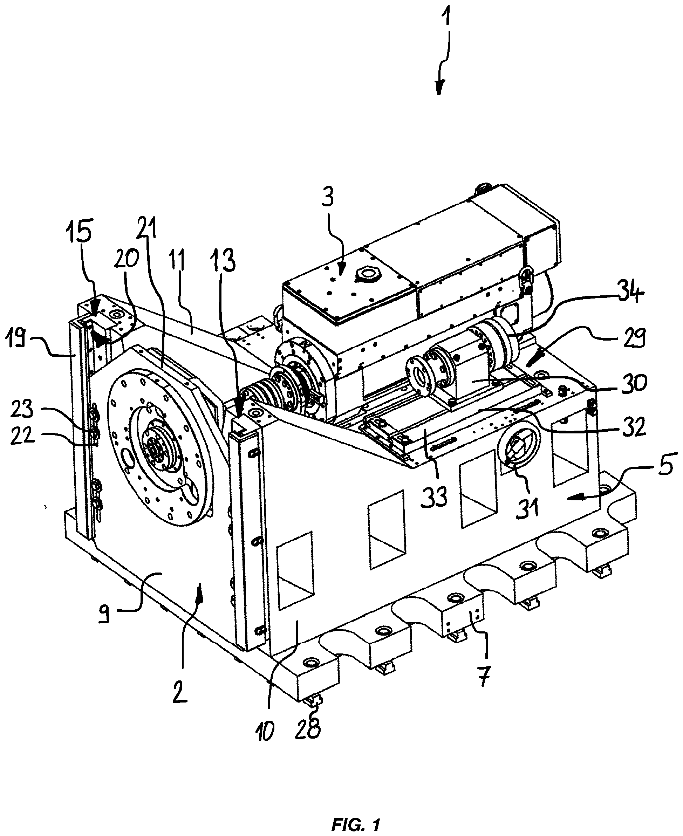

Die Figuren 1, 2, 3 und 4 zeigen einen Prüfstand 1 in unterschiedlichen Ansichten und werden im Folgenden zusammen beschrieben.

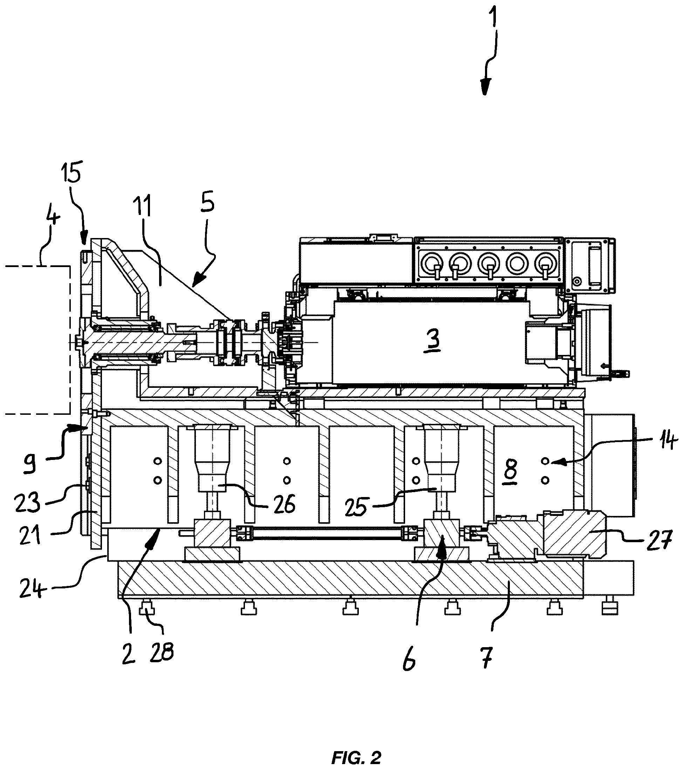

Der Prüfstand 1 weist einen Träger 2 zur Aufnahme eines Antriebsmotors 3 und eines in Figur 2 schematisch dargestellten Prüflings 4, hier beispielhaft in Form eines Getriebes, auf. Der Träger 2 ist an einem Gestell 5 des Prüfstands 1 vertikal verstellbar geführt. Hierzu dient eine Verstelleinheit 6, die auf einer Bodenplatte 7 des Prüfstands 1 aufgestellt ist und sich vertikal nach oben gegen den Träger 2 abstützt.

Der Träger 2 weist einen Motorträger 8 zum Aufnehmen des Antriebsmotors 3 und einen Prüflingträger 9 zum Aufnehmen des Prüflings 4 auf. Der Motorträger 8 und der Prüflingträger 9 sind als separate Baueinheiten gestaltet und miteinander verbunden, im gezeigten Ausführungsbeispiel miteinander verschraubt. Andere Verbindungsarten, wie Schweißverbindungen, oder ein integraler einstückiger Aufbau sind ebenfalls denkbar.

Das Gestell 5 weist zwei parallel zueinander angeordnete Seitenwangen, nämlich eine erste Seitenwange 10 und eine zweite Seitenwange 11 auf. Die beiden Seitenwangen 10, 11 sind aus Mineralguss gefertigt. Zwischen den beiden Seitenwangen 10, 11 ist der Motorträger 8 des Trägers 2 aufgenommen und gegenüber den beiden Seitenwangen 10, 11 vertikal verstellbar geführt.

Zur Führung weist die erste Seitenwange 10 mehrere Motorträgerführungen 12 und eine Prüflingträgerführung 13 auf. Die zweite Seitenwange 11 weist analog mehrere Motorträgerführungen 14 und eine Prüflingträgerführung 15 auf. Die Motorträgerführung 12, 14 dient zum Führen des Motorträgers 8 und die Prüflingträgerführungen 13, 15 dienen zum Führen des Prüflingträgers 9. Grundsätzlich ist es auch denkbar, dass nur Motorträgerführungen oder nur Prüflingträgerführungen vorgesehen sind, um den Träger 2 zu führen.

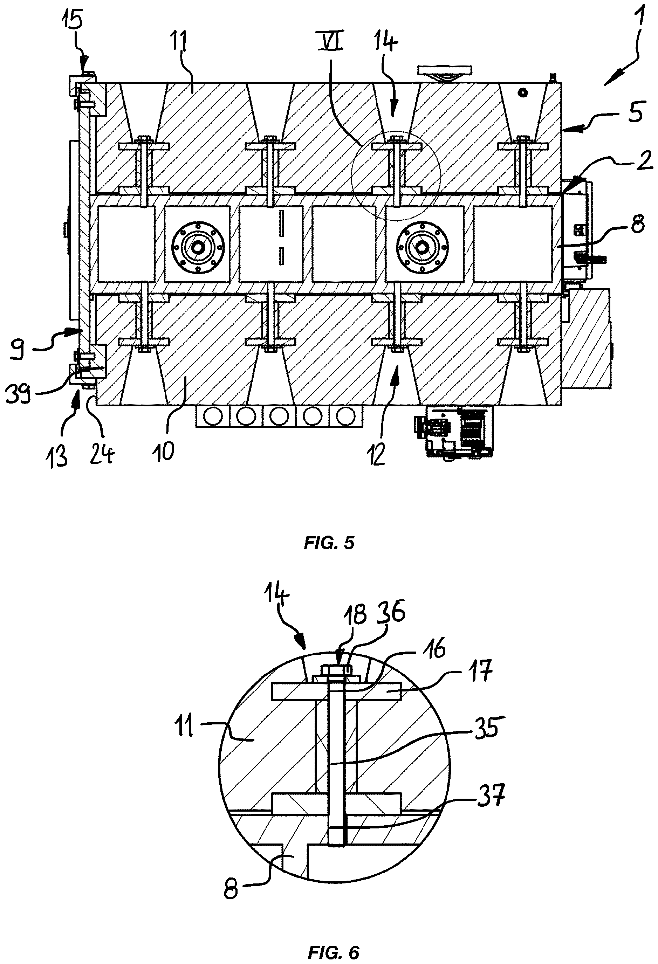

Im Folgenden werden die Motorträgerführungen 12, 14 insbesondere anhand der Figuren 5 und 6 näher beschrieben, wobei die Figur 5 einen Horizontalschnitt durch den Prüfstand 1 zeigt und Figur 6 eine vergrößerte Darstellung einer der Motorträgerführungen 14 der zweiten Seitenwange 11. Die Motorträgerführung 14 der zweiten Seitenwange 11 gemäß Figur 6 wird repräsentativ für alle Motorträgerführungen 12, 14 beschrieben, die alle identisch aufgebaut sind.

Die Motorträgerführungen 14 gemäß Figur 6 weist eine Verstärkungsplatte 17 auf, die in die zweite Seitenwange 11 eingegossen ist und in einer vertikalen Ebene angeordnet ist. In der Verstärkungsplatte 17 ist eine Führungsschlitz 16 eingebracht, der vertikal ausgerichtet ist und die Verstärkungsplatte 17 in Dickenrichtung vollständig durchdringt. Die Verstärkungsplatte 17 kann aus einem Stahlwerkstoff hergestellt sein. In dem Mineralgussmaterial der zweiten Seitenwange ist ebenfalls ein Schlitz 35 angeordnet, der die zweite Seitenwange 11 vollständig durchdringt und bis zum Motorträger 8 des Trägers 2 reicht.

Durch den Führungsschlitz 16 sind zwei Spannelemente 18 (von denen in den Figuren 5 und 6 nur eines erkennbar ist) hindurchgeführt, die auf einer inneren Seite der zweiten Seitenwange 11, die der ersten Seitenwange 10 zugewandt ist, mit dem Motorträger 8 verbunden und auf einer der ersten Seitenwange 10 abgewandten Seite der zweiten Seitenwange 11 einen Spannkopf 36 aufweisen, über den der Motorträger 8 gegen die zweite Seitenwange 11 verspannt werden kann. Die Spannelemente 18 sind als Schrauben ausgebildet, die einen Schraubenkopf als Spannkopf 36 aufweisen. Die Spannelemente 18 sind in entsprechende Gewindebohrungen 37 des Motorträgers 8 eingeschraubt.

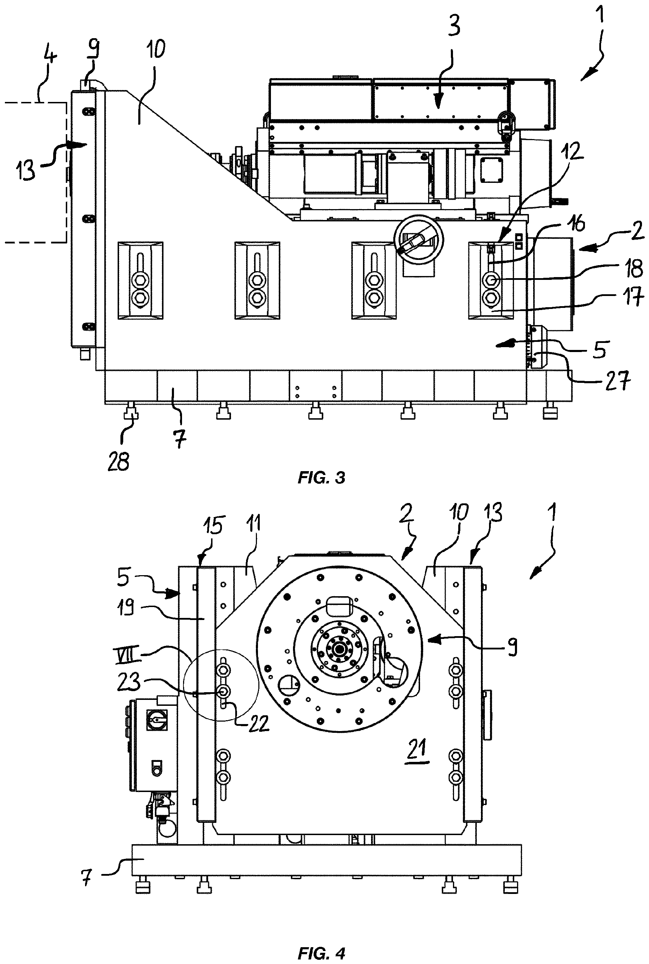

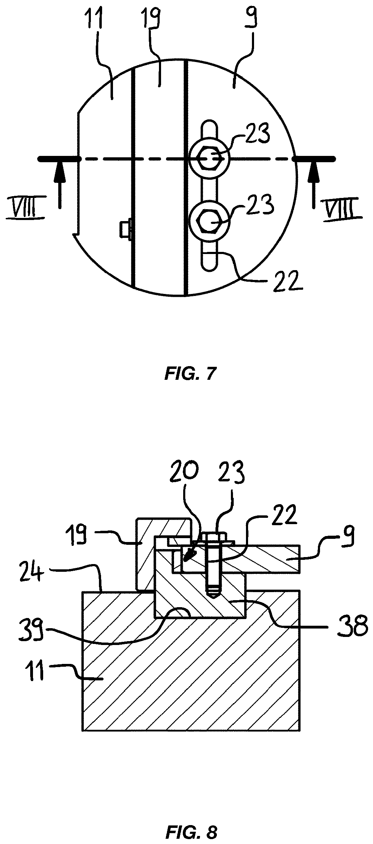

Im Folgenden werden die Prüflingträgerführungen 13, 15 insbesondere anhand der Figuren 7 und 8 näher beschrieben, wobei Figur 7 eine vergrößerte Ansicht des Bereichs VII gemäß Figur 4 ist und Figur 8 eine Schnittdarstellung entlang der Schnittlinie VIII-VIII gemäß Figur 7 ist. Zusammen mit den Figuren 7 und 8 wird die Prüflingträgerführung 15 der zweiten Seitenwange 11 auch repräsentativ für die Prüflingträgerführung 13 der ersten Seitenwange 10 beschrieben, da die Prüflingträgerführung 13 der ersten Seitenwange 10 identisch zur Prüflingträgerführung 15 der zweiten Seitenwange 11 ausgebildet ist.

Die Prüflingträgerführung 15 der zweiten Seitenwange 11 umfasst eine äußere Führungsschiene 19 und eine innere Führungsschiene 38. Die innere Führungsschiene 38 ist in einer vertikalen Nut 39 in einer Stirnfläche 24 der zweiten Seitenwange 11 angeordnet und an der zweiten Seitenwange 11 befestigt. Die äußere Führungsschiene 19 ist an der inneren Führungsschiene 38 befestigt. Die beiden Führungsschienen 19, 38 sind im Querschnitt jeweils L-förmig ausgebildet und bilden zusammen im Querschnitt eine Führungsnut 20, in der eine Stirnplatte 21 des Prüflingträgers 9 vertikal verstellbar geführt ist. Hierzu ist die Führungsnut 20 entsprechend vertikal ausgerichtet.

In der Stirnplatte 19 sind zwei Führungsschlitze 22 ausgebildet, durch welche jeweils zwei Spannelemente 23 hindurchgeführt sind. Die Spannelemente 23 sind auf einer dem Motorträger 8 zugewandten Seite der Stirnplatte 21 mit der inneren Führungsschiene 38 verschraubt und weisen auf der vom Motorträger 8 abgewandten Seite der Stirnplatte 21 Spannköpfe auf, über die die Stirnplatte 21 mit der inneren Führungsschiene 38 verspannt werden kann. Die Spannelemente 23 sind als Schrauben ausgebildet, die einen Schraubenkopf als Spannkopf aufweisen. Die Spannelemente 23 sind in entsprechende Gewindebohrungen der Stirnplatte 21 eingeschraubt.

Die Motorträgerführungen 14 der zweiten Seitenwange 11 sind, wie bereits erläutert, identisch zu den Motorträgerführungen 12 der ersten Seitenwange 11 ausgebildet, wobei die Motorträgerführungen 12, 14 der beiden Seitenwangen 10, 11 jeweils paarweise gegenüberliegend zueinander angeordnet sind.

Die Prüflingträgerführung 13 der ersten Seitenwange 10 ist analog zu der Prüflingträgerführung 15 der zweiten Seitenwange 11 ausgebildet und weist eine Führungsnut auf, die der Führungsnut 20 der Prüflingträgerführung 15 der zweiten Seitenwange 11 zugewandt ist.

Die Seitenwangen 10, 11 sind auf einer gemeinsamen Bodenplatte befestigt. Auf der Bodenplatte steht die Verstelleinheit 6 auf. Die Verstelleinheit 6 weist zwei Hubstreben 25, 26 auf, die einerseits gegen die Bodenplatte 7 und andererseits gegen den Motorträger 8 vertikal abgestützt sind und von einem gemeinsamen Hubmotor 27 derart angetrieben sind, dass der Motorträger 8 vertikal gegenüber der Bodenplatte 7 und gegenüber den beiden Seitenwangen 10, 11 verstellbar ist.

An einer Unterseite der Bodenplatte 7 weist diese mehrere Fixierelemente 28 auf, die derart gestaltet sind, dass der Prüfstand auf einem T-Nutenfeld sicher befestigt werden kann.

Auf einer Lagerbefestigung 29 ist ein Lager 30 für eine nicht dargestellte Getriebeabtriebswelle angeordnet, die einen horizontal in Längsrichtung zum Prüfstand 1 über ein Verstellrad 31 verschiebbaren Schlitten 32 umfasst. Eine Aufspannplatte 33 der Lagerbefestigung 22 ist starr mit der ersten Seitenwange 10 verbunden und somit nicht höhenverstellbar ausgeführt. Der Schlitten 32 kann in unterschiedlichen Positionen in Längsrichtung auf der Aufspannplatte 33 fixiert werden. Ein durch die Höhenverstellung des Prüflings 4 hervorgerufener Längenunterschied der Getriebeabtriebswelle in horizontaler Projektion kann somit mittels des Schlittens 32 ausgeglichen werden, wodurch die Position des Lagers 30 verändert wird.

In diesem Zusammenhang kann das Lager 30 als Drehmomentmessstelle ausgeführt sein, wobei das Lager 30 somit nicht nur die auf die Getriebeabtriebswelle wirkenden Kräfte in die Seitenwange 10 ableitet, sondern darüber hinaus durch die Getriebeabtriebswelle übertragene Drehmomente sowie Drehzahlen erfasst und an eine Auswertevorrichtung oder Aufzeichnungsvorrichtung weiterleitet.

Die Anordnung des Lagers 30 weist einen Bremsenflansch 34 auf. Der Bremsenflansch 34 dient hierbei dazu, eine Verbindung mit einer Bremsanordnung, wie beispielsweise einem Dynamometer, über welche Umgebungssituationen bzw. Betriebsbedingungen für den Prüfling 4, beispielsweise einem Getriebe, simuliert werden können. Ein entsprechender Bremsenflansch kann auch auf der anderen Seite des Prüflings an einer weiteren Abtriebswelle vorgesehen sein. Somit lassen sich zum Beispiel Getriebe prüfen, die zwei Seitenwellen als Abtriebswellen antreiben.

### Bezugszeichenliste

- 1: Prüfstand
- 2: Träger
- 3: Antriebsmotor
- 4: Prüfling
- 5: Gestell
- 6: Verstelleinheit
- 7: Bodenplatte
- 8: Motorträger
- 9: Prüflingträger
- 10: erste Seitenwange
- 11: zweite Seitenwange
- 12: Motorträgerführung
- 13: Prüflingträgerführung
- 14: Motorträgerführung
- 15: Prüflingträgerführung
- 16: Führungsschlitz
- 17: Verstärkungsplatte
- 18: Spannelement
- 19: äußere Führungsschiene
- 20: Führungsnut
- 21: Stirnplatte
- 22: Führungsschlitz
- 23: Spannelement
- 24: Stirnfläche
- 25: Hubstrebe
- 26: Hubstrebe
- 27: Hubmotor
- 28: Fixierelement
- 29: Lagerbefestigung
- 30: Lager
- 31: Verstellrad
- 32: Schlitten
- 33: Aufspannplatte
- 34: Bremsflansch
- 35: Schlitz
- 36: Spannkopf
- 37: Gewindebohrung
- 38: innere Führungsschiene
- 39: Nut

## Patentansprüche

1. Prüfstand (1) zum Testen eines Prüflings (4) mit drehmomentübertragenden Komponenten eines Antriebsstrangs eines Fahrzeugs umfassend:
einen Träger (2) zum Aufnehmen eines Antriebsmotors (3) und des Prüflings (4),
ein Gestell (5), das zwei Seitenwangen (10, 11) aufweist,
wobei der Träger (2) an dem Gestell (5) vertikal verstellbar geführt ist, wobei der Träger (2) einen Motorträger (8) zum Aufnehmen des Antriebsmotors (3) und einen Prüflingträger (9) zum Aufnehmen des Prüflings (4) aufweist, wobei der Motorträger (8) und der Prüflingträger (9) als separate, miteinander verbundene Baueinheiten gestaltet sind, und wobei der Motorträger (8) zwischen den beiden Seitenwangen (10, 11) des Gestells (5) angeordnet ist, und
eine Verstelleinheit (6) zum vertikalen Verstellen des Trägers (2) gegenüber dem Gestell (5),
**dadurch gekennzeichnet,**
**dass** die Seitenwangen (10, 11) aus Mineralguss gefertigt sind, und
**dass** an den Seitenwangen (10, 11) Führungen (12, 13, 14, 15) zum Führen des Trägers (2) angeordnet sind, wobei die Führungen Motorträgerführungen (12,14) zum Führen und Verstellen des Motorträgers (8) umfassen.

2. Prüfstand nach Anspruch 1,
**dadurch gekennzeichnet,**
**dass** die Seitenwangen (10, 11) im Wesentlichen parallel zueinander angeordnet sind.

3. Prüfstand nach Anspruch 1 oder 2,
**dadurch gekennzeichnet,**
**dass** die Führungen (12, 13, 14, 15) jeweils zumindest ein Spannelement zum Festsetzen des Trägers (2) am Gestell (5) aufweisen.

4. Prüfstand nach einem der Ansprüche 1 bis 3,
**dadurch gekennzeichnet,**
**dass** die Führungen (12, 13, 14, 15) jeweils einen Führungsschlitz (16, 22) und zumindest ein Führungselement aufweisen, wobei das zumindest eine Führungselement in dem Führungsschlitz (16, 22) verstellbar geführt ist.

5. Prüfstand nach Anspruch 4,
**dadurch gekennzeichnet,**
**dass** die Führungselemente des Trägers (2) jeweils zumindest ein Spannelement zum Festsetzen des Trägers (2) am Gestell (5) aufweisen.

6. Prüfstand nach einem der Ansprüche 1 bis 5,
**dadurch gekennzeichnet,**
**dass** die Führungen (12, 13) einer ersten Seitenwange (10) der beiden Seitenwangen (10, 11) und die Führungen (14, 15) einer zweiten Seitenwange (11) der beiden Seitenwangen (10, 11) paarweise gegenüberliegend zueinander angeordnet sind.

7. Prüfstand nach Anspruch 6,
**dadurch gekennzeichnet,**
**dass** die Motorträgerführungen (12, 14) jeweils eine Verstärkungsplatte (17) aufweisen, die in die jeweilige Seitenwange (10, 11) eingegossen ist, und dass die Verstärkungsplatte (17) einen Führungsschlitz (16) aufweist.

8. Prüfstand nach einem der Ansprüche 1 bis 7,
**dadurch gekennzeichnet,**
**dass** die Führungen Prüflingträgerführungen (13, 15) zum Führen des Prüflingträgers (9) umfasst.

9. Prüfstand nach Anspruch 8,
**dadurch gekennzeichnet,**
**dass** die Prüflingträgerführungen (13, 15) jeweils eine Führungsschiene (19) aufweisen, die an der jeweiligen Seitenwange (10, 11) befestigt ist und an der der Prüflingträger (9) vertikal geführt ist.

10. Prüfstand nach Anspruch 9,
**dadurch gekennzeichnet,**
**dass** die Führungsschienen (19) an den Seitenwangen (10, 11) jeweils zumindest ein Spannelement (23) zum Festsetzen des Prüflingträgers (9) am Gestell (5) aufweisen.

11. Prüfstand nach einem der Ansprüche 9 oder 10
**dadurch gekennzeichnet,**
**dass** die Führungsschienen (19) jeweils an einer Stirnfläche (24) der jeweiligen Seitenwange (10, 11) angeordnet sind und
**dass** die Stirnflächen (24) der beiden Seitenwangen (10, 11) in einer gemeinsamen Ebene angeordnet sind.

12. Prüfstand nach einem der Ansprüche 1 bis 11,
**dadurch gekennzeichnet,**
**dass** die Seitenwangen (10, 11) auf einer gemeinsamen Bodenplatte (7) befestigt sind.

## Claims

1. Test bench (1) for testing a test object (4) with torque transmitting components of a driveline of a vehicle:
a carrier (2) for accommodating a drive motor (3) and the test object (4),
a frame (5) that has two side walls (10, 11), wherein the carrier (2) is vertically displaceably guided on the frame (5), wherein the carrier (2) a has a motor carrier (8) for accommodating the drive motor (3) and a test object carrier (9) for accommodating the test object (4), wherein the motor carrier (8) and the test object carrier (9) are formed as separate, interconnected units and wherein the motor carrier (8) is arranged between the two side walls (10, 11) of the frame (5), and
an adjustment unit (6) for vertical adjusting the carrier (2) relative to the frame (5),
**characterised in**
**that** the side walls (10, 11) are made from mineral cast and
**that** guides (12, 13, 14, 15) are arranged on the side walls (10, 11) for guiding the carrier (2), wherein die guides comprise motor carrier guides (12, 14) to guide and adjust the motor carrier (8).

2. Test bench according to claim 1,
**characterised in**
**that** the side walls (10, 11) are arranged essentially parallel to each other.

3. Test bench according to claim 1 or 2,
**characterised in**
**that** the guides (12, 13, 14, 15) each have at least one clamping element for fixing the carrier (2) to the frame (5).

4. Test bench according to anyone of the preceding claims 1 to 3,
**characterised in**
**that** the guides (12, 13, 14, 15) each have one guide slot (16, 22) and at least one guide element, wherein the at least one guide element is displaceably guided in the guide slot (16, 22).

5. Test bench according to claim 4,
**characterised in**
**that** the guide elements of the carrier (2) each have at least one clamping element for fixing the carrier (2) to the frame (5).

6. Test bench according to anyone of the preceding claims 1 to 5,
**characterised in**
**that** the guides (12, 13) of a first side wall (10) of the two side walls (10, 11), and the guides (14, 15) of a second side wall (11) of the two side walls (10, 11) are arranged in pairs opposite each other.

7. Test bench according to claim 6,
**characterised in**
**that** the motor carrier guides (12, 14) each have a reinforcement plate (17), which is cast into the respective side wall (10, 11), and
**that** the reinforcement plate (17) has a guide slot (16).

8. Test bench according to anyone of the preceding claims 1 to 7,
**characterised in**
**that** the guides comprise test object carrier guides (13, 15) for guiding the test object carrier (9).

9. Test bench according to claim 8,
**characterised in**
**that** the test object carrier guides (13, 15) each have a guide rail (19), which is attached to the respective side wall (10, 11) and on which the test object carrier (9) is vertically guided.

10. Test bench according to claim 9,
**characterised in**
**that** the guide rails (19) on the side walls (10, 11) each have at least one clamping element (23) for fixing the test object carrier (9) to the frame (5).

11. Test bench according to anyone of claims 9 or 10,
**characterised in**
**that** each guide rail (19) is arranged on a front face (24) of the respective side wall (10, 11) and
**that** the front faces (24) of the two side walls (10, 11) are arranged in a common plane.

12. Test bench according to anyone of the preceding claims 1 to 11,
**characterised in**
**that** the side walls (10, 11) are mounted on a common base plate (7).

## Revendications

1. Banc d'essai (1) pour tester un instrument d'essai (4) comportant des composants de transmission de couple d'une chaîne cinématique d'un véhicule comprenant :
un support (2) pour recevoir un moteur d'entraînement (3) et l'éprouvette (4),
un châssis (5), qui présente deux panneaux latéraux (10, 11), dans lequel le support (2) est guidé de manière réglable en hauteur sur le châssis (5), dans lequel le support (2) présente un support de moteur (8) pour renfermer le moteur d'entraînement (3) et un porte-éprouvette (9) pour renfermer l'éprouvette (4), dans lequel le support de moteur (8) et le porte-éprouvette (9) sont conçus comme des unités structurelles séparées reliées l'une à l'autre, et le support de moteur (8) est disposé entre les deux panneaux latéraux (10, 11) du châssis (5), et une unité de réglage (6) pour le réglage vertical du support (2) par rapport au châssis (5),
**caractérisé en ce que** les panneaux latéraux (10, 11) sont fabriqués en fonte minérale, et
que sur les panneaux latéraux (10, 11) des guides (12, 13, 14, 15) pour guider le support (2) sont disposés, dans lequel les guides comprennent des guides de montage de moteur (12, 14) pour guider et régler le support de moteur (8).

2. Banc d'essai selon la revendication 1, **caractérisé en ce que** les panneaux latéraux (10, 11) sont disposées sensiblement parallèlement l'une à l'autre.

3. Banc d'essai selon la revendication 1 ou 2, **caractérisé en ce que** les guides (12, 13, 14, 15) comportent chacun au moins un élément de serrage pour la fixation du support (2) sur le châssis (5).

4. Banc d'essai selon une des revendications 1 à 3, **caractérisé en ce que** les guides (12, 13, 14, 15) comportent chacun une fente de guidage (16, 22) et au moins un élément de guidage, dans lequel le au moins un élément de guidage est guidé de manière réglable dans la fente de guidage (16, 22).

5. Banc d'essai selon la revendication 4, **caractérisé en ce que** les éléments de guidage du support (2) comportent chacun au moins un élément de serrage pour la fixation du support (2) sur le châssis (5).

6. Banc d'essai selon une des revendications 1 à 5, **caractérisé en ce que** les guides (12, 13) d'un premier panneau latéral (10) des deux panneaux latéraux (10, 11) et les guides (14, 15) d'un deuxième panneau latéral (11) des deux panneaux latéraux (10, 11) sont disposés par paires face à face.

7. Banc d'essai selon la revendication 6, **caractérisé en ce que** les guides de support de moteur (12, 14) présentent chacun une plaque de renfort (17), qui est moulée dans le panneau latéral respective (10, 11), et **en ce que** la plaque de renfort (17) présente une fente de guidage (16).

8. Banc d'essai selon une quelconque des revendications 1 à 7, **caractérisé en ce que** les guides comprennent des guides de porte-éprouvette (13, 15) pour guider le porte-éprouvette (9).

9. Banc d'essai selon la revendication 8, **caractérisé en ce que** les guides de porte-éprouvette (13, 15) présentent chacun un rail de guidage (19), qui est fixé au panneau latéral respectif (10, 11) et sur lequel le porte-éprouvette (9) est guidé verticalement.

10. Banc d'essai selon la revendication 9, **caractérisé en ce que** les rails de guidage (19) sur les panneaux latéraux (10, 11) présentent chacun au moins un élément de serrage (23) pour fixer le porte-éprouvette (9) sur le châssis (5).

11. Banc d'essai selon une des revendications 9 ou 10, **caractérisé en ce que** les rails de guidage (19) sont disposés chacun sur une face d'extrémité (24) des panneaux latéraux respectifs (10, 11) et que les faces d'extrémité (24) des deux panneaux latéraux (10, 11) sont disposées dans un plan commun.

12. Banc d'essai selon une des revendications 1 à 11, **caractérisé en ce que** les panneaux latéraux (10, 11) sont fixés à une plaque de base commune (7).
